# EUROPÄISCHE PATENTSCHRIFT

(11) **EP 2 753 840 B1**
(45) Veröffentlichungstag und Bekanntmachung des Hinweises auf die Patenterteilung: **14.10.2015**
(21) Anmeldenummer: 12756074.6
(22) Anmeldetag: 08.08.2012
(51) Int. Cl.: F16D 23/12, F16D 21/06, F16D 28/00

(54) **REIBUNGSKUPPLUNG**
FRICTION CLUTCH
EMBRAYAGE À FRICTION

(30) Priorität: 05.09.2011 DE 102011082116
(43) Veröffentlichungstag der Anmeldung: 16.07.2014
(73) Patentinhaber: Schaeffler Technologies AG & Co. KG, 91074 Herzogenaurach (DE)
(72) Erfinder: FRIEDMANN, Oswald, 77839 Lichtenau (DE); JOST, Markus, 77815 Bühl (DE); BOROWSKI, Marco, 77830 Bühlertal (DE)
(86) Internationale Anmeldenummer: PCT/DE2012/000799
(87) Internationale Veröffentlichungsnummer: WO 2013/034121

(56) Entgegenhaltungen:
- DE-A1-102005 007 967
- DE-A1-102009 042 829
- DE-A1-102010 024 927
- JP-A- 4 337 119

## Beschreibung

Die Erfindung betrifft eine Reibungskupplung, mit deren Hilfe eine Eingangswelle, insbesondere eine Antriebswelle eines Antriebsmotors eines Kraftfahrzeugs, mit einer Ausgangswelle, insbesondere eine Getriebeeingangswelle eines Kraftfahrzeuggetriebes, gekuppelt werden kann.

Aus DE 10 2009 042 224 A1 ist eine Doppelkupplung mit zwei Reibungskupplungen bekannt, die eine Kurbelwelle einer Brennkraftmaschine mit einer inneren Getriebeeingangswelle und einer koaxial angeordneten äußeren Getriebeeingangswelle eines Kraftfahrzeuggetriebes verbinden können. Hierzu wir bei der jeweiligen Reibungskupplung mit Hilfe eines hydraulischen Betätigungssystems eine Anpressplatten relativ zu einer Gegenplatte mit Hilfe einer schwenkbaren Tellerfeder bewegt, um zwischen der Anpressplatte und der Gegenplatte eine Kupplungsscheibe zu verpressen.

Es besteht ein ständiges Bedürfnis die zum Betätigen von Reibungskupplungen aufzubringenden Betätigungskräfte zu reduzieren ohne den Bauraumbedarf signifikant zu erhöhen.

Es ist die Aufgabe der Erfindung Maßnahmen aufzuzeigen, die bei einem geringen Bauraumbedarf ein Betätigen einer Reibungskupplung mit einer geringen aufzubringenden Betätigungskraft ermöglichen.

Die Lösung der Aufgabe erfolgt erfindungsgemäß durch eine Reibungskupplung mit den Merkmalen des Anspruchs 1 sowie durch eine Reibungskupplung mit den Merkmalen des Anspruchs 9. Bevorzugte Ausgestaltungen der Erfindung sind in den Unteransprüchen angegeben.

Aus DE 10 2005 007 967 A1 ist eine Reibungskupplung für ein Kraftfahrzeug bekannt, insbesondere zum Kuppeln eines Antriebsmotors eines Kraftfahrzeugs mit einem Kraftfahrzeuggetriebe, die mit einer Gegenplatte vorgesehen ist, einer relativ zu der Gegenplatte bewegbaren Anpressplatte zum Verpressen einer Kupplungsscheibe zwischen der Gegenplatte und der Anpressplatte, einem Flaschenzug, insbesondere Faktorflaschenzug, zur Übertragung einer Betätigungskraft zum relativen Bewegen der Anpressplatte zur Gegenplatte, mindestens einer über ein erstes Zugmittel mit dem Flaschenzug gekoppelten Zugrolle, wobei die Zugrolle bewegbar geführt ist. Erfindungsgemäß ist einer über ein zweites Zugmittel mit der Zugrolle verbundenen Differentialseilwinde zur Verlagerung der Zugrolle, wobei die Differentialseilwinde um eine im Wesentlichen in axialer Richtung der Reibungskupplung ausgerichtete Drehachse drehbar ist.

Durch die Differentialseilwinde kann beim Betätigen der Reibungskupplung über die verlagerte Zugrolle in dem Flaschenzug ein Drehmoment einem anderen Drehmoment entgegenwirken, so dass nur eine Betätigungskraft aufgebracht werden muss, welche die Differenz der entgegenwirkenden Drehmomente überwinden kann. Die aufzubringende Betätigungskraft zum Betätigen der Reibungskupplung, insbesondere zum Verpressen der Kupplungsscheibe zwischen der Anpressplatte und der Gegenplatte, kann dadurch deutlich reduziert werden. Ein hydraulisches System zur Bereitstellung der aufzubringenden Betätigungskraft kann kleiner und bauraumsparender dimensioniert oder durch einen elektrischen Antrieb ersetzt werden. Gleichzeitig ist es möglich die Relativlage der Anpressplatte zur Gegenplatte mit einer erhöhten Auflösung und Genauigkeit zu steuern, so dass ein harter Kontakt beim Schließen der Reibungskupplung mit Hilfe einer geeigneten Regelung vermieden werden kann. Ferner kann ein sich durch Verschleiß von Reibbelägen verändernder Hubweg der Anpressplatte zum Verpressen der Kupplungsscheibe besonders einfach berücksichtigt werden. Aufgrund der deutlich reduzierten aufzubringenden Betätigungskraft kann die Reibungskupplung auf einer Kurbelwelle einer Brennkraftmaschine eines Kraftfahrzeugs gelagert sein. Durch die im Wesentlichen axiale Ausrichtung der Drehachse der Differentialseilwinde insbesondere im Wesentlichen parallel zu einer Kupplungsdrehachse der Reibungskupplung ist es nicht erforderlich die Differentialseilwinde in axialer Richtung auf der Anpressplatte oder der Gegenplatte aufzusetzen. Stattdessen ist es möglich die Differentialseilwinde in die Anpressplatte oder in die Gegenplatte hineinzuverlagern. Die Differentialseilwinde kann in radialer Richtung auf Höhe des die Anpressplatte oder die Gegenplatte ausbildenden Materials, mit dem die Differentialseilwinde verbunden ist, angeordnet sein. Insbesondere kann ein freigelassener Bauraum, der in radialer Richtung auf Höhe der Anpressplatte oder der Gegenplatte vorgesehen ist, zur Positionierung der Differentialseilwinde genutzt werden. Das zweite Zugmittel kann erforderlichenfalls an einer durch die Gegenplatte oder die Anpressplatte ausgebildeten vorzugsweise gerundeten Kante entlang gleitend zur Differentialseilwinde geführt sein. Der Bauraumbedarf in axialer Richtung wird dadurch nicht signifikant erhöht. Dies ermöglicht ein Betätigen der Reibungskupplung mit einer geringen aufzubringenden Betätigungskraft ohne den Bauraumbedarf signifikant zu erhöhen.

Im Rahmen der vorliegenden Anmeldung ist unter "Reibungskupplung" jede Kupplung mir Eingangs- und Ausgangsteil zu verstehen, die ausgehend von einer vollständig ausgerückten Betätigungsstellung, in der zwischen Eingangs- und Ausgangsteil im Wesentlichen keine Kraftübertragung erfolgt, bis hin zu einer vollständig eingerückten Betätigungsstellung, in der zwischen Eingangs- und Ausgangsteil im Wesentlichen eine vollständige Kraftübertragung erfolgt, betätigungsabhängig eine zunehmende Kraftübertragung ermöglicht, wobei eine Kraftübertragung zwischen Eingangs- und Ausgangsteil reibschlüssig erfolgt. Umgekehrt erfolgt ausgehend von einer vollständig eingerückten Betätigungsstellung, in der zwischen Eingangs- und Ausgangsteil im Wesentlichen eine vollständige Kraftübertragung erfolgt, bis hin zu einer vollständig ausgerückten Betätigungsstellung, in der zwischen Eingangs- und Ausgangsteil im Wesentlichen keine Kraftübertragung erfolgt, betätigungsabhängig eine abnehmende Kraftübertragung. Die Reibungskupplung kann insbesondere Teil einer Doppelkupplung sein, wobei die Doppelkupplung insbesondere mindestens zwei derartige Reibungskupplungen aufweist.

Das erste Zugmittel und/oder das zweite Zugmittel kann als Seil, Riemen, insbesondere Flachriemen oder Keilriemen, insbesondere Poly-V-Riemen, Kette oder Ähnliches ausgestaltet sein. Das erste Zugmittel und/oder das zweite Zugmittel ist insbesondere faserverstärkt und/oder weist mindestens einen Metalldraht auf, so dass eine besonders hohe Zugfestigkeit gegeben ist. Die Differentialseilwinde weist insbesondere eine erste Seiltrommel und eine zweite Seiltrommel auf, wobei die Seiltrommeln unterschiedliche Durchmesser aufweisen, so dass sich die von der Differentialseilwinde abgewickelte Länge des zweiten Zugmittels ändern kann, wenn das zweite Zugmittel von der einen Seiltrommel abgewickelt und von der anderen Seiltrommel aufgewickelt wird. Vorzugsweise kann die Zugrolle direkt oder indirekt mit einer Rückstellfeder verbunden sein, um die Zugrolle bei geöffneter Reibungskupplung in einer designierten Öffnungsstellung zu positionieren. Bei der designierten Öffnungsstellung der Zugrolle kann auch ein bisher eingetretener Verschleiß von Reibbelägen der Reibungskupplung berücksichtigt werden, so dass über die designierte Öffnungsstellung der Zugrolle eine Verschleißnachstellung realisiert werden kann.

Insbesondere weist die Gegenplatte und/oder die Anpressplatte einen Führungsschlitz zur Führung der bewegbaren Zugrolle auf. Insbesondere bei einer Doppelkupplung mit einer zentralen Gegenplatte für beide Reibungskupplungen ("Drei-Platten-Design") kann der Flaschenzug, die Zugrolle und die Differentialseilwinde alternativ jeweils mit der Anpressplatte der jeweiligen Reibungskupplung verbunden sein.

Vorzugsweise weist der Flaschenzug mindestens zwei über das erste Zugmittel miteinander gekoppelte Umlenkrollen auf, wobei mindestens eine Umlenkrölle mit der Anpressplatte und mindestens eine Umlenkrolle mit der Gegenplatte verbunden sind. Besonders bevorzugt ist durch die Bewegung der Zugrolle ein Faktorflaschenzug zur relativen Bewegung der Anpressplatte zur Gegenplatte betätigbar, wobei der Faktorflaschenzug insbesondere eine Mehrzahl an Umlenkrollen aufweist. Beispielsweise an einem nach radial außen weisenden Rand der Anpressplatte und/oder der Gegenplatte sind die Umlenkrollen vorgesehen, wobei die Umlenkrollen insbesondere eine im Wesentlichen in radialer Richtung weisende Drehachse aufweisen. Vorzugsweise umschling das erste Zugmittel oder ein weiteres Zugmittel des Flaschenzugs alternierend eine mit der Gegenplatte verbundene Umlenkrolle und eine mit der Anpressplatte verbundene Umlenkrolle, so dass sich mit jeder weiteren Umlenkrolle die Übersetzung erhöht. Bei einer auf den Flaschenzug aufgebrachten Zugkraft kann die Anpressplatte auf die Gegenplatte zu gezogen werden, um die Reibungskupplung zu schließen.

Besonders bevorzugt weist die Anpressplatte und/oder die Gegenplatte eine Aufnahmeöffnung zur zumindest teilweisen Aufnahme der Differentialseilwinde auf, wobei insbesondere die Differentialseilwinde in axialer Richtung der Reibungskupplung in die Aufnahmeöffnung einsetzbar ist. Insbesondere kann das Material der Anpressplatte oder der Gegenplatte die Aufnahmeöffnung vollständig begrenzen und einen umlaufenden Rand ausbilden. Ferner ist es möglich, dass die Aufnahmeöffnung vorzugsweise nach radial innen geöffnet ausgebildet ist. Durch die Aufnahmeöffnung kann die Differentialseilwinde an einer definierten Position zumindest teilweise innerhalb der Anpressplatte oder der Gegenplatte positioniert werden, so dass der Bauraumbedarf der Differentialseilwinde in axialer Richtung der Reibungskupplung minimiert werden kann.

Insbesondere ist mit der Differentialseilwinde, insbesondere über das selbe zweite Zugmittel, mehr als eine Zugrolle gekoppelt. Das zweite Zugmittel kann beispielsweise um eine Drehachse der Reibungskupplung außerhalb eines Mindestabstands zur Kupplungsdrehachse umlaufend geführt sein. Das zweite Zugmittel kann beispielsweise von der ersten Seiltrommel über zwei, drei oder mehr Zugrollen geführt zur zweiten Seiltrommel umlaufend verlaufen, so dass bei einer Drehung der Differentialseilwinde alle Zugrollen verlagert werden können, an denen das zweite Zugmittel entlang geführt ist. Die an den Zugrollen angreifenden Kräfte können sich dadurch automatisch ausgleichen, so dass die Anpressplatte mit einer gleichmäßig verteilten Anpresskraft die Kupplungsscheibe zwischen der Anpressplatte und der zugeordneten Gegenplatte verpressen kann.

Vorzugsweise ist mit der Zugrolle mehr als ein Flaschenzug gekoppelt. Der jeweilige Flaschenzug kann mit seinem jeweiligen ersten Zugmittel gegebenenfalls über zwischengeschaltete Umlenkrollen mit der Zugrolle gekoppelt sein. Durch eine Betätigung der Zugrolle mit Hilfe der Differentialseilwinde können mehrere Flaschenzüge gleichzeitig betätigt werden, um die Reibungskupplung zu schließen. Dadurch ist es beispielsweise möglich mit Hilfe einer einzigen mit der Differentialseilwinde gekoppelten Zugrolle sämtliche Flaschenzüge der Reibungskupplung zu betätigen. Der Aufbau der Reibungskupplung kann dadurch vereinfacht und die Bauteileanzahl reduziert werden.

Besonders bevorzugt sind mit der Zugrolle ein erster Flaschenzug und ein zweiter Flaschenzug gekoppelt, wobei der erste Flaschenzug und der zweite Flaschenzug in Umfangsrichtung gegenüberliegend angeordnet sind und das erste Zugmittel des zweiten Flaschenzugs in eine gegenteilige Umfangsrichtung als das erste Zugmittel des ersten Fläschenzugs verläuft. Der erste Flaschenzug und der zweite Flaschenzug sind vorzugsweise im Wesentlichen symmetrisch aufgebaut und angeordnet. Das erste Zugmittel des ersten Flaschenzugs und das erste Zugmittel des zweiten Flaschenzugs können zwischen dem radial äußeren Rand der Anpressplatte beziehungsweise der Gegenplatte und der Zugrolle im Wesentlichen den gleichen Weg nehmen, so dass für beide Flaschenzüge in diesem Bereich der selbe Bauraum genützt werden kann. Dies führt zu einem kompakten und bauraumsparenden Aufbau der Reibungskupplung.

Insbesondere sind mit der Zugrolle ein erster Flaschenzug und ein dritter Flaschenzug gekoppelt, wobei das erste Zugmittel des dritten Flaschenzugs über eine Umlenkrollen des ersten Flaschenzugs mit der Zugrolle gekoppelt ist. Das erste Zugmittel des dritten Flaschenzugs kann dadurch zwischen dem radial äußeren Rand der Anpressplatte beziehungsweise der Gegenplatte und der Zugrolle im Wesentlichen den gleichen Weg wie das erste Zugmittel des ersten Flaschenzugs nehmen. Die Umlenkrolle des ersten Flaschenzugs kann soweit radial außen positioniert sein, dass das erste Zugmittel des dritten Flaschenzugs vergleichbar zu einer Sekante von dort bis zu einem in Umfangsrichtung deutlich beabstandeten Position verlaufen kann ohne mit radial innen positionierten Baueinheiten zu kollidieren. Eine gesonderte Zugrolle für den dritten Flaschenzug kann dadurch eingespart werden. Dies führt zu einem kompakten und bauraumsparenden Aufbau der Reibungskupplung.

Vorzugsweise ist die Zugrolle mit einem Bewegungsanteil in radialer Richtung, insbesondere mit einem überwiegenden Bewegungsanteil in radialer Richtung, bewegbar. Insbesondere sind mehrere, vorzugsweise mindestens drei, in Umfangsrichtung, insbesondere regelmäßig, verteilte Zugrollen vorgesehen, wobei die Zugrollen überwiegend in radialer Richtung bewegbar geführt sind. Das zweite Zugmittel kann dadurch in Umfangsrichtung von einer ersten Seiltrommel zu einer mit der ersten Seiltrommel drehfest verbundenen zweiten Seiltrommel der Differentialseilwinde verlaufen ohne in einen radial inneren oder radial äußeren Bereich hineinzuragen, in denen andere Funktionsgruppen der Reibungskupplung positioniert werden können, kollidieren zu können. Ferner kann die von der Differenzialseilwinde bereitgestellte Betätigungskraft auf mehrere Zugrollen verteilt werden, so dass die an der Anpressplatte angreifende Betätigungskraft gleichmäßig verteilt werden kann. Eine Schrägstellung der Anpressplatte bei einer Relativbewegung zur Gegenplatte kann dadurch vermieden werden. Beispielsweise sind drei Zugrollen um 120° in Umfangsrichtung versetzt angeordnet und bilden ein Kräftegleichgewicht mit den Seiltrommeln, so dass sich die von den Seiltrommeln aufgrund der Momentendifferenz zwischen den Seiltrommeln ergebende Betätigungskraft gleichmäßig auf die Zugrollen aufteilen kann.

Besonders bevorzugt weist die Differentialseilwinde eine erste Seiltrommel und eine mit der ersten Seiltrommel drehfest verbindbare zweite Seiltrommel auf, wobei das zweite Zugmittel sowohl die erste Seiltrommel als auch die zweite Seiltrommel umschlingt, wobei der Durchmesser der ersten Seiltrommel im Bereich des umschlungenen zweiten Zugmittels größer als der Durchmesser der zweiten Seiltrommel im Bereich des umschlungenen zweiten Zugmittels ist, wobei das zweite Zugmittel über die mindestens eine Zugrolle verläuft. Die erste Seiltrommel und die zweite Seiltrommel können koaxial zueinander angeordnet sein und sind insbesondere drehfest miteinander verbunden. Die erste Seiltrommel und die zweite Seiltrommel sind insbesondere einstückig ausgeführt. Das zweite Zugmittel kann als Seil, Riemen, insbesondere Flachriemen oder Keilriemen, insbesondere Poly-V-Riemen, Kette oder Ähnliches ausgestaltet sein, so dass zwischen dem zweiten Zugmittel und den Seiltrommeln eine reibschlüssige und/oder formschlüssige Kraftübertragung stattfinden kann. Das zweite Zugmittel ist insbesondere faserverstärkt und/oder weist mindestens einen Metalldraht auf, so dass eine besonders hohe Zugfestigkeit gegeben ist. Durch die Bewegung der Zugrolle kann beispielsweise ein Hebel, insbesondere eine als Tellerfeder ausgestaltete Hebelfeder, zum Schließen der Reibungskupplung betätigt werden. Die Zugrolle kann beispielsweise in einem Führungsschlitz geführt sein, wobei die Zugrolle insbesondere in dem Führungsschlitz verliersicher, beispielsweise mit Hilfe einer Kulissenführung oder Schwalbenschwanzverbindung, eingesetzt ist.

Die Übersetzung der Differentialseilwinde kann durch den sich verändernden Durchmesser im Bereich der jeweiligen Seiltrommel zur Anlage des zweiten Zugmittels nicht konstant sondern nicht-linear eingestellt sein. Dies ermöglicht es beispielsweise zu Beginn des Schließens der Reibungskupplung eine größere Durchmesserdifferenz zwischen der ersten Seiltrommel und der zweiten Seiltrommel vorzusehen, so dass mit einer erhöhten aufzubringenden Betätigungskraft ein größerer Hubweg für die Anpressplatte erreicht werden dann. Im Laufe der Schließbewegung der Reibungskupplung kann die Durchmesserdifferenz zwischen der ersten Seiltrommel und der zweiten Seiltrommel kleiner eingestellt sein, so dass die Anpressplatte mit einer geringeren Anpressgeschwihdigkeit auf die Kupplungsscheibe treffen kann und/oder mit einer geringeren aufzubringenden Betätigungskraft eine entsprechend höhere an der Anpressplatte angreifende Betätigungskraft erreicht werden kann, die im geschlossenen Zustand der Reibungskupplung eine besonders hohe Reibungskraft zur Übertragung besonders hoher Drehmomente ermöglicht. Die nicht-lineare Übersetzung der Differentialseilwinde kann derart gewählt sein, dass sich die an der Anpressplatte angreifende Betätigungskraft gleichmäßig, insbesondere linear, erhöht. Der Drehwinkel der Differentialseilwinde ist hierbei im vollständig geöffneten Zustand der Reibungskupplung maximal und im geschlossenen Zustand, minimal. Der Durchmesser der ersten Seiltrommel und der zweiten Seiltrommel kann insbesondere derart gewählt sein, dass sich bei einer Drehung der Seiltrommeln zwischen einer geöffneten und einer geschlossenen Stellung eine im Wesentliche lineare Moment-Drehwinkel-Kennline für einen die Seiltrommeln antreibenden Elektromotor ergibt.

Vorzugsweise weist die erste Seiltrommel und/oder die zweite Seiltrommel eine Seilspur zur Führung des zweiten Zugmittels in Umfangsrichtung auf, wobei die Seilspur eine definierte Steigung in axialer Richtung der Seiltrommel aufweist. Durch die Seilspur, die beispielsweise als Vertiefung mit einer zum zweiten Zugmittel korrespondieren Konturierung ausgestaltet ist, kann die Relativlage des zweiten Zugmittels in axialer Richtung der jeweiligen Seiltrommel vorgegeben werden. Dadurch wird vermieden, dass sich das zweite Zugmittel auf sichi selbst aufwickelt und sich in nicht kontrollierbarer Weise ein nicht beabsichtigter wirksamer Durchmesser für das zweite Zugmittel einstellt. Insbesondere bei einer nicht-linearen Übersetzung durch einen sich in axialer Richtung der jeweiligen Seiltrommel ändernden Durchmesser, können die Durchmesserverhältnisse durch die Seilspur genau vorgegeben-werden.

Besonders bevorzugt weist das zweite Zugmittel ein mit der ersten Seiltrommel verbundenes erstes Ende und ein mit der zweiten Seiltrommel verbundenes zweites Ende auf. Die Lage des zweiten Zugmittels relativ zur ersten Seiltrommel und/oder relativ zur zweiten Seiltrommel kann dadurch genau vorgegeben werden. Alternativ ist das zweite Zugmittel als geschlossener Ring, beispielsweise durchgehendes Seil, ausgestaltet, wobei das zweite Zugmittel weder mit der ersten Seiltrommel noch mit der zweiten Seiltrommel fixiert ist. In diesem Fall können die Kraftverhältnisse und/oder die Position der mindestens einen Zugrolle über die genaue Länge des zweiten Zugmittels beeinflusst werden.

Insbesondere ist die Differentialseilwinde mit einem Elektromotor, insbesondere ein Linear-Servomotor, zur Betätigung der Differentialseilwinde verbunden ist. Der Elektromotor weist insbesondere eine Abtriebswelle auf, die koaxial zu der ersten Seiltrommel und/oder zu der zweiten Seiltrommel angeordnet ist und vorzugsweise mit der ersten Seiltrommel und/oder mit der zweiten Seiltrommel drehfest verbunden ist. Alternativ kann zwischen dem Elektromotor und der jeweiligen Seiltrommel ein Übersetzungsgetriebe vorgesehen sein. Durch den Elektromotor kann ein hydraulisches Betätigungssystem zur Betätigung der Reibungskupplung eingespart werden. Ferner kann eine besonders kompakte und bauraumsparende Bauweise für die Reibungskupplung erreicht werden. Der Elektromotor kann beispielsweise über ein elektrisches Bordnetz eines Kraftfahrzeugs angetrieben werden.

Die Erfindung betrifft ferner eine Reibungskupplung für ein Kraftfahrzeug, insbesondere zum Kuppeln eines Antriebsmotors eines Kraftfahrzeugs mit einem Kraftfahrzeuggetriebe, mit einer Gegenplatte, einer relativ zu der Gegenplatte bewegbaren Anpressplatte zum Verpressen einer Kupplungsscheibe zwischen der Gegenplatte und der Anpressplatte einem Betätigungssystem zur Übertragung einer Betätigungskraft zum relativen Bewegen der Anpressplatte zur Gegenplatte, wobei das Betätigungssystem mindestens ein von dem Betätigungssystem antreibbares Antriebsrad und ein mittelbar oder unmittelbar mit dem Antriebsrad kraftübertragend in Wirkverbindung stehendes Bremsrad aufweist, wobei das Bremsrad zur axialen Bewegung der Anpressplatte relativ zur Grundplatte bei einer Drehung des Antriebsrads fest oder gebremst drehbar mit der Anpressplatte oder der Grundplatte verbunden ist, und einer über ein Zugmittel mit dem Antriebsrad gekoppelten Antriebsrolle, wobei die Antriebsrolle um eine im Wesentlichen in axialer Richtung der Reibungskupplung ausgerichtete Drehachse drehbar ist.

Durch das zumindest gebremste, insbesondere drehfest arretierte, Bremsrad kann das Bremsrad eine so hohe Widerstandskraft gegen ein Verdrehen bereitstellen, dass das Bremsrad eine Widerstandskraft mit einem Kraftanteil in axialer Richtung auf das Antriebsrad aufprägt. Da die Anpressplatte in axialer Richtung relativ bewegbar zur Grundplatte ausgeführt ist, kann die Anpressplatte je nach Drehrichtung des Antriebsrads aufgrund der angreifenden Widerstandskraft in axialer Richtung von der Grundplatte weg oder zu der Grundplatte hin bewegt werden. Hierzu kann beispielsweise das Bremsrad in axialer Richtung an dem Umfang des Antriebsrads oder einem zwischen geschalteten Zwischenrad in axialer Richtung entlang klettern. Insbesondere bei einer Umfangsverzahnung des Antriebsrads, des Bremsrads und/oder gegebenenfalls zwischengeschalteter Zwischenräder kann die abstehende Erstreckung der Verzahnung ausreichen die Anpressplatte über den beabsichtigen Hubweg axial zu bewegen, ohne dass die miteinander kämmenden Verzahnungen außer Eingriff geraten. Über eine entsprechende Dimensionierung des Antriebsrads und des Bremsrads, insbesondere der beteiligten Wälzkreisdurchmesser, kann bei einer vergleichsweise geringen Betätigungskraft ein hoher Hubweg für die Anpressplatte erreicht werden. Insbesondere sind das Antriebsrad und/oder das Bremsrad vergleichsweise starr, so dass ein Hubwegverlust, beispielsweise infolge von unter Belastung mit der Betätigungskraft elastisch gebogenen Betätigungshebeln, vermieden oder zumindest deutlich reduziert ist. Die Betätigungseinrichtung, insbesondere ein Kupplungseinrücker oder ein Kupplungsausrücker, kann dadurch kleiner dimensioniert sein. Durch die im Wesentlichen axiale Ausrichtung der Drehachse der Antriebsrolle insbesondere im Wesentlichen parallel zu einer Kupplungsdrehachse der Reibungskupplung ist es nicht erforderlich die Antriebsrolle in axialer Richtung auf der Anpressplatte oder der Gegenplatte aufzusetzen. Stattdessen ist es möglich die Antriebsrolle in die Anpressplatte oder in die Gegenplatte hineinzuverlagern. Die Antriebsrolle kann in radialer Richtung auf Höhe des die Anpressplatte oder die Gegenplatte ausbildenden Materials, mit dem die Antriebsrolle gelagert ist, angeordnet sein. Insbesondere kann ein freigelassener Bauraum, der in radialer Richtung auf Höhe der Anpressplatte oder der Gegenplatte vorgesehen ist, zur Positionierung der Antriebsrolle genutzt werden: Das das Zugmittel kann erforderlichenfalls an einer durch die Gegenplatte oder die Anpressplatte ausgebildeten vorzugsweise gerundeten Kante entlang gleitend zur Antriebsrolle geführt sein. Der Bauraumbedarf in axialer Richtung wird dadurch nicht signifikant erhöht. Dies ermöglicht ein Betätigen der Reibungskupplung mit einer geringen aufzubringenden Betätigungskraft ohne den Bauraumbedarf signifikant zu erhöhen.

In dem Fall, dass keine Zwischenräder und nur das Antriebsrad sowie das Bremsrad vorgesehen sind, ist das Antriebsrad mit der Grundplatte und das Bremsrad mit der Anpressplatte verbunden oder umgekehrt. In dem Fall von zwischengeschalteten Zwischenräder kann zumindest ein Zwischenrad mit der Anpressplatte oder mit der Grundplatte verbunden sein, um eine axiale Kraft auf die Anpressplatte zu übertragen, so dass das Bremsrad wahlweise mit der Anpressplatte oder mit der Grundplatte verbunden sein kann. Vorzugsweise ist das Antriebsrad mit der Grundplatte drehbar verbunden, so dass die Betätigungseinrichtung besonders einfach ein Drehmoment in das Antriebsrad einleiten kann. Die Grundplatte kann insbesondere direkt oder indirekt mit der Betätigungseinrichtung verbunden sein, so dass sich zwischen der Grundplatte und der Betätigungseinrichtung keine Relativbewegungen ergeben. Dies erleichtert es die von der Betätigungseinrichtung bereitgestellte Betätigungskraft an das Antriebsrad zu übertragen und als von dem Antriebsrad bereitgestelltes Drehmoment zu Verfügung zu stellen. Dieses Drehmoment kann mittelbar oder unmittel an dem Bremsrad angreifen, das dadurch kraftübertragend mittelbar öder unmittelbar in Wirkverbindung mit dem Antriebsrad steht. Durch die kraftübertragende Wirkverbindung zwischen dem Antriebsrad und dem Bremsrad kann ein Kraftfluss zwischen dem Antriebsrad und dem Bremsrad bereitgestellt werden, der eine resultierende Widerstandskraft in axialer Richtung zum axialen Bewegen der Anpressplatte erzeugen kann.

Vorzugsweise weist die Anpressplatte und/oder die Gegenplatte eine Aufnahmeöffnung zur zumindest teilweisen Aufnahme der Antriebsrolle aufweist, wobei insbesondere die Antriebsrolle in axialer Richtung der Reibungskupplung in die Aufnahmeöffnung einsetzbar ist. Insbesondere kann das Material der Anpressplatte oder der Gegenplatte die Aufnahmeöffnung vollständig begrenzen und einen umlaufenden Rand ausbilden. Ferner ist es möglich, dass die Aufnahmeöffnung vorzugsweise nach radial innen geöffnet ausgebildet ist. Durch die Aufnahmeöffnung kann die Antriebsrolle an einer definierten Position zumindest teilweise innerhalb der Anpressplatte oder der Gegenplatte positioniert werden, so dass der Bauraumbedarf der Antriebsrolle in axialer Richtung der Reibungskupplung minimiert werden kann.

Insbesondere sind zwischen dem Antriebsrad und dem Bremsrad mindestens ein mit der Grundplatte drehbar verbundenes Grundplattenzwischenrad und/oder mindestens ein mit der Anpressplatte drehbar verbundenes Anpressplattenzwischenrad zwischengeschaltet. Aufgrund des gebremsten oder festgehaltenen Bremsrads nimmt bei Einleitung einer Betätigungskraft über das Antriebsrad der Drehwinkel der Zwischenräder, das heißt der Grundplattenzwischenräder und der Anpressplattenzwischenräder, von dem Antriebsrad zum Bremsrad hin ab. Durch die Anzahl der Zwischenräder kann die Gesamtübersetzung zwischen dem Antriebsrad und dem Bremsrad erhöht werden.

Vorzugsweise sind mehrere, insbesondere mindestens zwei oder mindestens drei, Grundplattenzwischenräder und mehrere, insbesondere mindestens zwei oder mindestens drei, Anpressplattenzwischenräder alternierend angeordnet. Dadurch lässt sich bei einem geringen Bauraumbedarf eine hohe Gesamtübersetzung realisieren. Berechnungen zeigen, dass es möglich ist bei sieben oder acht Zwischenrädern mit einer Betätigungskraft von unter 400 N einen Hubweg von ca. 22 mm für die Anpressplatte zu realisieren und dabei das Antriebsrad, das Bremsrad und die Zwischenräder in einem radialen Bereich von kleiner 5 mm anzuordnen. Bei einem geringen Bauraumbedarf lässt sich eine hohe Gesamtübersetzung erreichen, so dass mit einer geringen Betätigungskraft ein großer Hubweg für die Anpressplatte erreicht werden kann. Ferner können die auftretenden Axialkräfte in axialer Richtung der Reibungskupplung im Wesentlichen gleichmäßig verteilt werden, so dass mit einer hohen Genauigkeit eine Parallelbewegung der Anpressplatte in axialer Richtung erreicht werden kann. Aufgrund der geringen benötigten Betätigungskraft kann eine Reibungskupplung mit einem derartigen Betätigungssystem ohne Schwierigkeiten auf einer Antriebswelle eines Kraftfahrzeugmotors, insbesondere einer Kurbelwelle einer Brennkraftmaschine, gelagert werden.

Insbesondere ist das Antriebsrad mit Hilfe eines Gleitlagers oder eines Wälzlagers gelagert. Hierzu ist beispielsweise ein mit der Grundplatte befestigter im Wesentlich radial verlaufender Bolzen vorgesehen, um den das Antriebsrad rotieren kann. Die gegebenenfalls vorgesehenen Zwischenräder können entsprechend gelagert sein, wobei der jeweilige Bolzen mit der Grundplatte oder mit der Anpressplatte verbunden sein kann. Der Bolzen kann insbesondere ein Gewinde aufweisen, über das der Bolzen mit einem korrespondierenden Innengewinder der Grundplatte oder der Anpressplatte verschraubt werden kann.

Besonders bevorzugt sind das Antriebsrad und das Bremsrad tangential oder in Umfangsrichtung angeordnet. Insbesondere sind die gegebenenfalls vorgesehenen Zwischenräder ebenfalls tangential oder in Umfangsrichtung angeordnet. Bei einer tangentialen Anordnung können das Antriebsrad, das Bremsrad und gegebenenfalls die Zwischenräder jeweils mit einer in tangentialer Richtung verlaufenden Leiste verbunden sein, die mit der Anpressplatte beziehungsweise mit der Grundplatte verbunden ist. Dies ermöglicht eine schnelle Montage, da die Leiste vormontiert verbaut werden kann. Bei einer Anordnung in Umfangsrichtung können das Antriebsrad, das Bremsrad und gegebenenfalls die Zwischenräder jeweils an einer radialen in Umfangsrichtung verlaufenden Mantelseite der Anpressplalte beziehungsweise der Grundplatte angeordnet werden. Dadurch ergibt sich ein besonders geringer Bauraumbedarf in radialer Richtung.

Die Erfindung betrifft ferner eine Doppelkupplung zum Kuppeln einer motorseitigen Eingangswelle mit einer ersten getriebeseitigen Ausgangswelle und/oder einer zweiten getriebeseitigen Ausgangswelle, mit einer ersten Reibungskupplung, die wie vorstehend beschrieben aus- und weitergebildet sein kann, zum Kuppeln der Eingangswelle mit der ersten Ausgangswelle und/oder einer zweiten Reibungskupplung, die wie vorstehend beschrieben aus- und weitergebildet sein kann, zum Kuppeln der Eingangswelle mit der zweiten Ausgangswelle. Dies ermöglicht ein Betätigen der Doppelkupplung mit einer geringen aufzubringenden Betätigungskraft ohne den Bauraumbedarf signifikant zu erhöhen.

Besonders bevorzugt sind die Differentialseilwinde der ersten Reibungskupplung und die Differentialseilwinde der zweiten Reibungskupplung in Umfangsrichtung zueinander versetzt angeordnet. Insbesondere sind die Zugrolle der ersten Reibungskupplung und die Zugrolle der zweiten Reibungskupplung und/oder der Flaschenzug der ersten Reibungskupplung und der Flaschenzug der zweiten Reibungskupplung in Umfangsrichtung zueinander versetzt angeordnet. Der Bauraumbedarf in axialer Richtung kann dadurch gering gehalten werden.

Die Erfindung betrifft ferner einen Antriebsstrang zum Kuppeln einer motorseitigen Eingangswelle mit mindestens einer getriebeseitigen Ausgangswelle, mit einer Reibungskupplung, die wie vorstehend beschrieben aus- und weitergebildet sein kann, und/oder einer Doppelkupplung, die wie vorstehend beschrieben aus- und weitergebildet sein kann. Dies ermöglicht ein Kuppeln der Eingangswelle mit der Ausgangswelle mit einer geringen aufzubringenden Betätigungskraft ohne den Bauraumbedarf signifikant zu erhöhen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Seitenansicht einer Doppelkupplung mit einer Reibungskupplung in einer ersten Ausführungsform,
- Fig. 2:: eine schematische Seitenansicht einer Doppelkupplung mit einer Reibungskupplung in einer zweiten Ausführungsform,
- Fig. 3:: eine schematische Seitenansicht einer Doppelkupplung mit einer Reibungskupplung in einer dritten Ausführungsform und
- Fig. 4:: eine schematische Seitenansicht einer Doppelkupplung mit einer Reibungskupplung in einer vierten Ausführungsform.

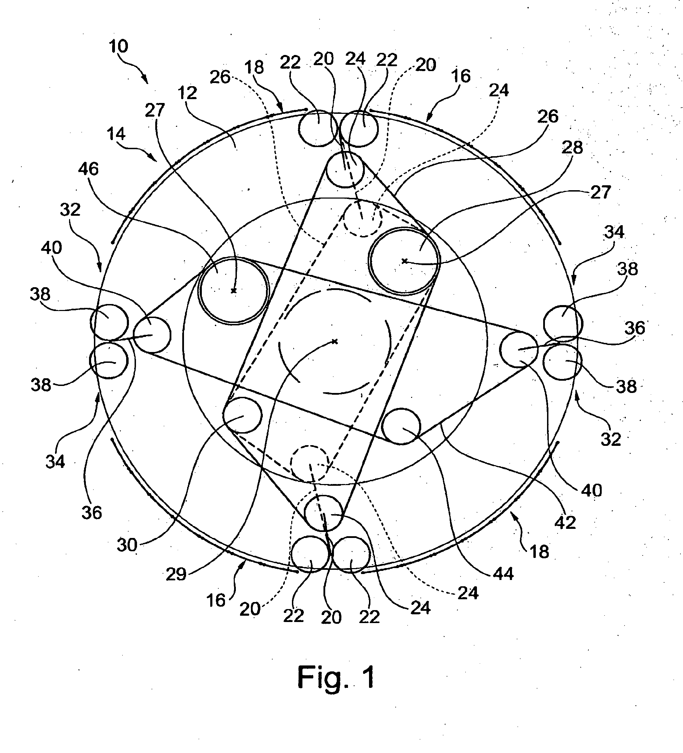

Bei den in Fig. 1 bis Fig. 4 dargestellten Doppelkupplungen 10 ist jeweils eine Anpressplatte 12 einer der Reibungskupplungen 14 in einer Ansicht von einem Kraftfahrzeuggetriebe in Richtung eines Kraftfahrzeugmotors gezeigt, wobei die Anordnung der mit der Anpressplatte 12 zusammenwirkenden Bauteile im geöffneten Zustand mit durchgezogenen Linien und im geschlossenen Zustand mit gestrichelten Linien dargestellt sind. Ferner sind die mit der anderen Anpressplatte der nicht gezeigten Reibungskupplung verbundenen Bauteile im geöffneten Zustand mit durchgezogenen Linien dargestellt.

Bei der in Fig. 1 dargestellten Ausführungsform der Reibungskupplung 14 ist an gegenüberliegenden Seiten der Anpressplatte 12 jeweils ein erster Flaschenzug 16 und ein symmetrisch zum ersten Flaschenzug 16 angeordneter zweiter Flaschenzug 18 vorgesehen, mit deren Hilfe die Anpressplatte 12 auf eine zugeordnete Gegenplatte gezogen werden kann, um eine Kupplungsscheibe zwischen der Anpressplatte 12 und der Gegenplatte zu verpressen. Der erste Flaschenzug 16 und der zweite Flaschenzug 18 weisen jeweils ein erstes Zugmittel 20 auf, dessen freies Ende über eine Umlenkrolle 22 nach radial innen geführt ist und dort mit einer Zugrolle 24 verbunden ist. Die Zugrolle 24 ist über ein zweites Zugmittel 26 mit einer Differentialseilwinde 28 gekoppelt, um bei einer Drehung der Differentialseilwinde 28 die Zugrolle 24 mit einem Bewegungsanteil in radialer Richtung zu verlagern und dadurch die Flaschenzüge 16, 18 zu betätigen. Die Differentialseilwinde 26 ist in axialer Richtung ausgerichtet und weist eine Drehachse 27 auf, die im Wesentlichen parallel zu einer Kupplungsdrehachse 29 der Doppelkupplung 10 ausgerichtet ist. Das zweite Zugmittel 26 kann zusätzlich über eine Zwischenrolle 30 geführt sein, damit das zweite Zugmittel 26 nicht mit radial innerhalb angeordneten Bauteilen kollidieren kann.

Die Anordnung der weiteren Reibungskupplung kann im Wesentlichen um 90° versetzt vorgesehen sein und im Übrigen dem Aufbau der Reibungskupplung 14 entsprechen. Dadurch sind ein weiterer erster Flaschenzug 32 und ein weiterer zweiter Flaschenzug 34 um 90° versetzt jeweils mit Hilfe eines weiteren ersten Zugmittel 36 über jeweils eine weitere Umlenkrolle 38 mit einer weiteren Zugrolle 40 verbunden, die über ein weiteres zweites Zugmittel 42 gegebenenfalls über eine weitere Zwischenrolle 44 mit einer weiteren Differentialseilwinde 46 verbunden ist, um durch eine Verlagerung der weiteren Zugrolle 40 den weiteren erster Flaschenzug 32 und den weiteren zweiten Flaschenzug 34 zu betätigen.

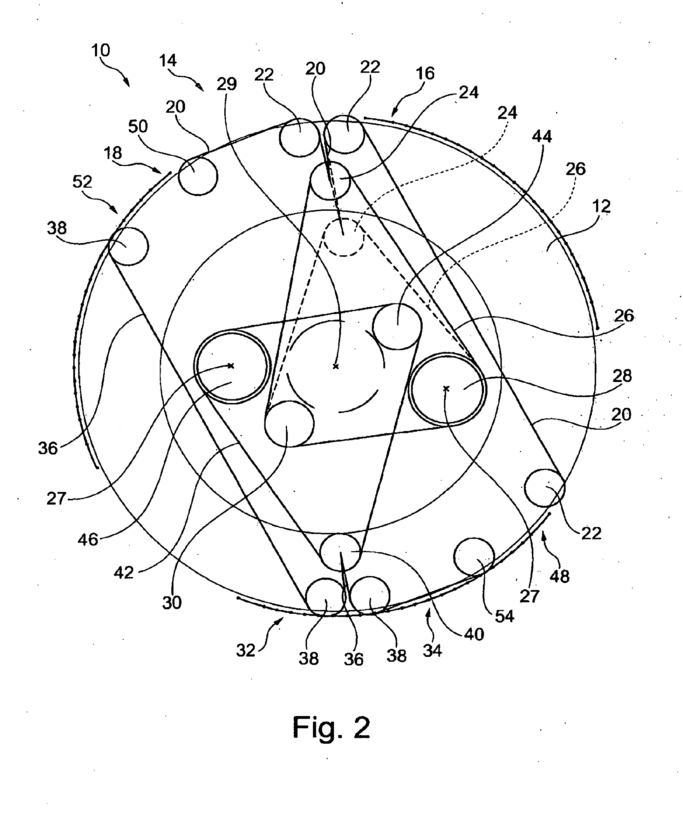

Bei der in Fig. 2 dargestellten Ausführungsform der Doppelkupplung 10 ist im Vergleich zur in Fig. 1 dargestellten Ausführungsform der Doppelkupplung 10 ist über die Umlenkrolle 22 des ersten Flaschenzugs 16 ein dritter Flaschenzug 48 an der Zugrolle 24 der Reibungskupplung 14 angebunden, der in Umfangsrichtung zum ersten Flaschenzug 16 deutlich versetzt angeordnet sein kann. Im dargestellten Ausführungsbeispiel ist das erste Zugmittel 20 des zweiten Flaschenzugs 18 über eine Zusatzumlenkrolle 50 geführt so dass die Flaschenzüge 16, 18, 48 gleichmäßig über den Umfang der Anpressplatte 12 verteilt angeordnet sein können. Bei der weiteren Reibungskupplung kann ebenfalls ein weiterer dritter Flaschenzug 52 an der weiteren Zugrolle 40 angekoppelt sein, während der weitere zweite Flaschenzug 34 mit Hilfe einer weiteren Zusatzumlenkrolle 54 in Umfangsrichtung versetzt angeordnet sein kann. Besonders bevorzugt ist nur genau eine Zugrolle 24 und/oder nur genau eine weitere Zugrolle 40 vorgesehen.

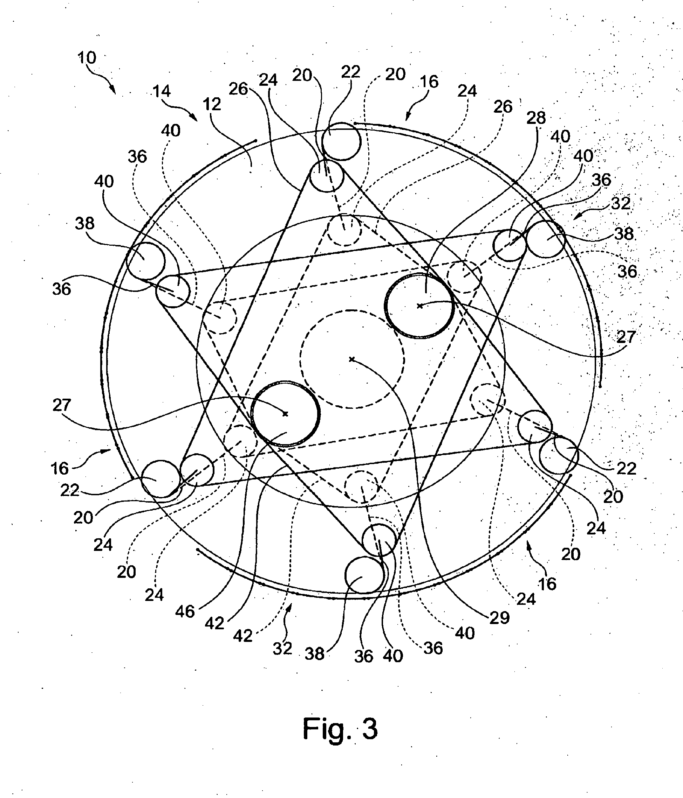

Bei der in Fig. 3 dargestellten Ausführungsform der Doppelkupplung 10 ist bei der Reibungskupplung 14 für jeden Flaschenzug 16 genau eine Zugrolle 24 vorgesehen. Die Zugrollen 24 sind insbesondere in Umfangsrichtung gleichmäßig verteilt, so dass bei der Anbindung von drei oder mehr Flaschenzügen 16 die Zwischenrolle 30 eingespart werden kann. Die weitere Reibungskupplung kann entsprechend ausgestaltet sein.

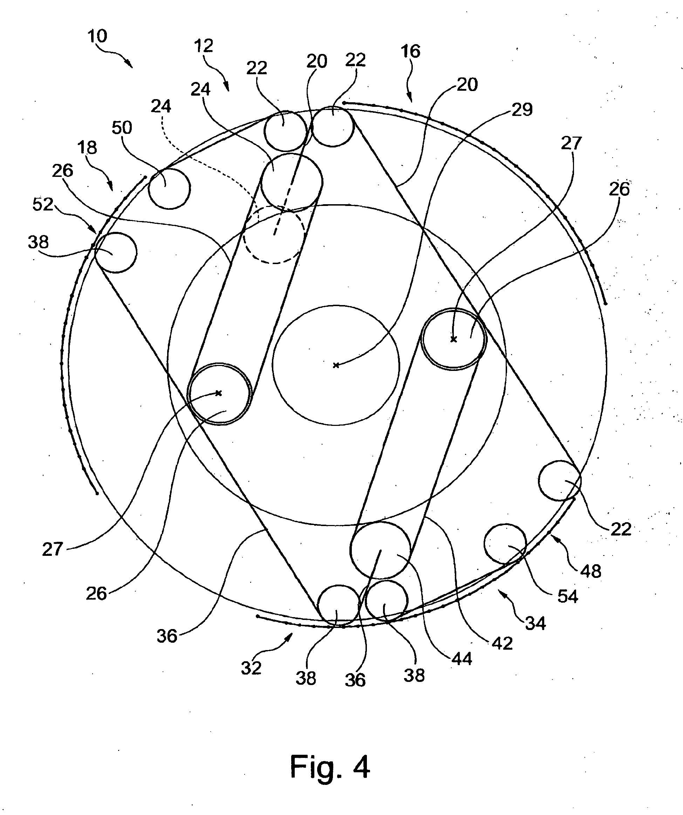

Bei der in Fig. 4 dargestellten Ausführungsform der Doppelkupplung 10 ist im Vergleich zu der in Fig. 2 dargestellten Ausführungsform der Doppelkupplung 10 das zweite Zugmittel 26 der Reibungskupplung 14 nicht umlaufend sondern in der Art einer Sekante geführt. Das zweite Zugmittel 26 kann dadurch deutlich kürzer ausgeführt sein. Darüber hinaus ist es möglich die Zwischenrolle 30 einzusparen. Insbesondere lässt sich über den Abstand der Zugrolle 24 zur Differentialseilwinde 28 besonders einfach eine Verschleißnachstellung zum Ausgleich eines verschleißbedingten Fehlabstandes der Anpressplatte 12 zur Gegenplatte-realisieren. Die weitere Reibungskupplung kann entsprechend ausgestaltet sein.

Die Erfindung wurde nur exemplarisch an den in Fig. 1 bis Fig. 4 dargestellten Ausführungsformen mit Flaschenzügen 16, 18, 48 erläutert. Es sind jedoch noch weitere konstruktive Ausgestaltungen von Reibungskupplungen 14 möglich. Insbesondere ist es möglich bei den Reibungskupplungen 14 die Flaschenzüge 16, 18, 48 durch alternierend mit der Anpressplatte 12 und der zugeordneten Gegenplatte verbundene, insbesondere als Zahnrad ausgestaltete, Antriebsräder, von denen mindestens ein Antriebsrad als Bremsrad gebremst oder blockiert ist, auszugestalten, wobei vorzugsweise eine Antriebsrolle, die besonders bevorzugt durch die Differentialseilwinde 28 ausgebildet ist, über das zweite Zugmittel 26 oder ohne das zweite Zugmittel 26 direkt mit dem Antriebsrad gekoppelt sein kann. Ferner ist es möglich die Differentialseilwinde 28 beziehungsweise Antriebsrolle zumindest teilweise in einer in der Anpressplatte 12 und/oder der zugeordneten Gegenplatte ausgebildeten Aufnahmeöffnung einzusetzen.

### Bezugszeichenliste

- 10: Doppelkupplung
- 12: Anpressplatte
- 14: Reibungskupplung
- 16: erster Flaschenzug
- 18: zweiter Flaschenzug
- 20: erstes Zugmittel
- 22: Umlenkrolle
- 24: Zugrolle
- 26: zweites Zugmittel
- 27: Drehachse
- 28: Differentialseilwinde
- 29: Kupplungsdrehachse
- 30: Zwischenrolle
- 32: weiterer erster Flaschenzug
- 34: weiterer zweiter Flaschenzug
- 36: weiteres erstes Zugmittel
- 38: weitere Umlenkrolle
- 40: weitere Zugrolle
- 42: weiteres zweites Zugmittel
- 44: weitere Zwischenrolle
- 46: weitere Differentialseilwinde
- 48: dritter Flaschenzug
- 50: Zusatzumlenkrolle
- 52: weiterer dritter Flaschenzug
- 54: weitere Zusatzumlenkrolle

## Patentansprüche

1. Reibungskupplung für ein Kraftfahrzeug, insbesondere zum Kuppeln eines Antriebsmotors eines Kraftfahrzeugs mit einem Kraftfahrzeuggetriebe, mit
einer Gegenplatte,
einer relativ zu der Gegenplatte bewegbaren Anpressplatte (12) zum Verpressen einer Kupplungsscheibe zwischen der Gegenplatte und der Anpressplatte (12),
einem Flaschenzug (16, 18, 48), insbesondere Faktorflaschenzug, zur Übertragung einer Betätigungskraft zum relativen Bewegen der Anpressplatte (12) zur Gegenplatte,
mindestens einer über ein erstes Zugmittel (20) mit dem Flaschenzug (16, 18, 48) gekoppelten Zugrolle (24), wobei die Zugrolle (24) bewegbar geführt ist, **gekennzeichnet durch**
einer über ein zweites Zugmittel (26) mit der Zugrolle (24) verbundene Differentialseilwinde (28) zur Verlagerung der Zugrolle (24), wobei die Differentialseilwinde (28) um eine im Wesentlichen in axialer Richtung der Reibungskupplung (14) ausgerichtete Drehachse (27) drehbar ist.

2. Reibungskupplung nach Anspruch 1, **dadurch gekennzeichnet, dass** die Anpressplatte (12) und/oder die Gegenplatte eine Aufnahmeöffnung zur zumindest teilweisen Aufnahme der Differentialseilwinde (28) aufweist, wobei insbesondere die Differentialseilwinde (28) in axialer Richtung der Reibungskupplung (14) in die Aufnahmeöffnung einsetzbar ist.

3. Reibungskupplung nach Anspruch 1 oder 2, **dadurch gekennzeichnet, dass** mit der Differentialseilwinde (28), insbesondere über das selbe zweite Zugmittel (26), mehr als eine Zugrolle (24) gekoppelt ist.

4. Reibungskupplung nach einem der Ansprüche 1 bis 3, **dadurch gekennzeichnet, dass** mit der Zugrolle (24) mehr als ein Flaschenzug (16, 18, 48) gekoppelt ist.

5. Reibungskupplung nach Anspruch 4, **dadurch gekennzeichnet, dass** mit der Zugrolle (24) ein erster Flaschenzug (16) und ein zweiter Flaschenzug (18) gekoppelt sind, wobei der erste Flaschenzug (16) und der zweite Flaschenzug (18) in Umfangsrichtung gegenüberliegend angeordnet sind und das erste Zugmittel (20) des zweiten Flaschenzugs (18) in eine gegenteilige Umfangsrichtung als das erste Zugmittel (20) des ersten Flaschenzugs (16) verläuft.

6. Reibungskupplung nach Anspruch 4 oder 5, **dadurch gekennzeichnet, dass** mit der Zugrolle (24) ein erster Flaschenzug (16) und ein dritter Flaschenzug (48) gekoppelt, sind, wobei das erste Zugmittel (20) des dritten Flaschenzugs (48) über eine Umlenkrolle (22) des ersten Flaschenzugs (16) mit der Zugrolle (24) gekoppelt ist.

7. Reibungskupplung nach einem der Ansprüche 1 bis 6, **dadurch gekennzeichnet, dass** die Zugrolle (24) mit einem Bewegungsanteil in radialer Richtung, insbesondere mit einem überwiegenden Bewegungsanteil in radialer Richtung, bewegbar ist.

8. Reibungskupplung nach einem der Ansprüche 1 bis 7, **dadurch gekennzeichnet**, das die Differentialseilwinde (28) eine erste Seiltrommel und eine mit der ersten Seiltrommel drehfest verbindbare zweite Seiltrommel aufweist, wobei das zweite Zugmittel (26) sowohl die erste Seiltrommel als auch die zweite Seiltrommel umschlingt, wobei der Durchmesser der ersten Seiltrommel im Bereich des umschlungenen Zugmittels größer als der Durchmesser der zweiten Seiltrommel im Bereich des umschlungenen Zugmittels ist, wobei das zweite Zugmittel (26) über die mindestens eine Zugrolle (24) verläuft.

9. Reibungskupplung für ein Kraftfahrzeug, insbesondere zum Kuppeln eines Antriebsmotors eines Kraftfahrzeugs mit einem Kraftfahrzeuggetriebe, mit
einer Gegenplatte,
einer relativ zu der Gegenplatte bewegbaren Anpressplatte (12) zum Verpressen einer Kupplungsscheibe zwischen der Gegenplatte und der Anpressplatte (12),
einem Betätigungssystem zur Übertragung einer Betätigungskraft zum relativen Bewegen der Anpressplatte (12) zur Gegenplatte, wobei das Betätigungssystem mindestens ein von dem Betätigungssystem antreibbares Antriebsrad und ein mittelbar oder unmittelbar mit dem Antriebsrad kraftübertragend in Wirkverbindung stehendes Bremsrad aufweist, wobei das Bremsrad zur axialen Bewegung der Anpressplatte (12) relativ zur Grundplatte bei einer Drehung des Antriebsrads fest oder gebremst drehbar mit der Anpressplatte (12) oder der Grundplatte verbunden ist, und
einer über ein Zugmittel (26) mit dem Antriebsrad gekoppelten Antriebsrolle (28), wobei die Antriebsrolle (28) um eine im Wesentlichen in axialer Richtung der Reibungskupplung (14) ausgerichtete Drehachse (27) drehbar ist.

10. Reibungskupplung nach Anspruch 9 **dadurch gekennzeichnet, dass** die Anpressplatte (12) und/oder die Gegenplatte eine Aufnahmeöffnung zur zumindest teilweisen Aufnahme der Antriebsrolle (28) aufweist, wobei insbesondere die Antriebsrolle (28) in axialer Richtung der Reibungskupplung (14) in die Aufnahmeöffnung einsetzbar ist.

## Claims

1. Friction clutch for a motor vehicle, in particular for coupling a drive engine of a motor vehicle to a motor vehicle transmission, having
a counter-plate,
a pressure plate (12) which can be moved relative to the counter-plate for pressing a clutch plate between the counter-plate and the pressure plate (12),
a pulley (16, 18, 48), in particular a factor pulley, for transmitting an actuating force for the relative movement of the pressure plate (12) with respect to the counter-plate,
at least one drawing roller (24) which is coupled to the pulley (16, 18, 48) via a first drawing means (20), the drawing roller (24) being guided movably, **characterized by** a differential winch (28) which is connected via a second drawing means (26) to the drawing roller (24) for displacing the drawing roller (24), the differential winch (28) being rotatable about a rotational axis (27) which is oriented substantially in the axial direction of the friction clutch (14).

2. Friction clutch according to Claim 1, **characterized in that** the pressure plate (12) and/or the counter-plate have/has a receiving opening for at least partially receiving the differential winch (28), it being possible, in particular, for the differential winch (28) to be inserted into the receiving opening in the axial direction of the friction clutch (14).

3. Friction clutch according to Claim 1 or 2, **characterized in that** more than one drawing roller (24) is coupled to the differential winch (28), in particular via the same second drawing means (26).

4. Friction clutch according to one of Claims 1 to 3, **characterized in that** more than one pulley (16, 18, 48) is coupled to the drawing roller (24).

5. Friction clutch according to Claim 4, **characterized in that** a first pulley (16) and a second pulley (18) are coupled to the drawing roller (24), the first pulley (16) and the second pulley (18) being arranged so as to lie opposite one another in the circumferential direction, and the first drawing means (20) of the second pulley (18) running in a different circumferential direction than the first drawing means (20) of the first pulley (16).

6. Friction clutch according to Claim 4 or 5, **characterized in that** a first pulley (16) and a third pulley (48) are coupled to the drawing roller (24), the first drawing means (20) of the third pulley (48) being coupled to the drawing roller (24) via a deflection roller (22) of the first pulley (16).

7. Friction clutch according to one of Claims 1 to 6, **characterized in that** the drawing roller (24) can be moved with a movement component in the radial direction, in particular with a predominant movement component in the radial direction.

8. Friction clutch according to one of Claims 1 to 7, **characterized in that** the differential winch (28) has a first cable drum and a second cable drum which can be connected fixedly to the first cable drum so as to rotate with it, the second drawing means (26) wrapping around both the first cable drum and the second cable drum, the diameter of the first cable drum in the region of the wrapped-around drawing means being greater than the diameter of the second cable drum in the region of the wrapped-around drawing means, the second drawing means (26) running over the at least one drawing roller (24).

9. Friction clutch for a motor vehicle, in particular for coupling a drive engine of a motor vehicle to a motor vehicle transmission, having
a counter-plate,
a pressure plate (12) which can be moved relative to the counter-plate for pressing a clutch plate between the counter-plate and the pressure plate (12),
an actuating system for transmitting an actuating force for the relative movement of the pressure plate (12) with respect to the counter-plate, the actuating system having at least one drive wheel which can be driven by the actuating system and one brake wheel which is operatively connected indirectly or directly to the drive wheel in a force-transmitting manner, the brake wheel being connected to the pressure plate (12) or the base plate fixedly or such that it can be rotated in a braked manner for the axial movement of the pressure plate (12) relative to the base plate during a rotation of the drive wheel, and
a drive roller (28) which is coupled to the drive wheel via a drawing means (26), the drive roller (28) being rotatable about a rotational axis (27) which is oriented substantially in the axial direction of the friction clutch (14).

10. Friction clutch according to Claim 9, **characterized in that** the pressure plate (12) and/or the counter-plate have/has a receiving opening for at least partially receiving the drive roller (28), it being possible, in particular, for the drive roller (28) to be inserted into the receiving opening in the axial direction of the friction clutch (14).

## Revendications

1. Embrayage à friction pour un véhicule automobile, en particulier pour l'accouplement d'un moteur d'entraînement d'un véhicule automobile à une transmission de véhicule automobile, comprenant
un contre-plateau,
un plateau de pression (12) mobile par rapport au contre-plateau pour presser un disque d'embrayage entre le contre-plateau et le plateau de pression (12),
un moufle (16, 18, 48), en particulier un moufle multiplicateur, pour la transmission d'une force d'actionnement en vue du déplacement relatif du plateau de pression (12) par rapport au contre-plateau,
au moins une poulie de traction (24) accouplée au moufle (16, 18, 48) par le biais d'un premier moyen de traction (20), la poulie de traction (24) étant guidée de manière mobile, **caractérisé par** un treuil à câble différentiel (28) qui est relié à la poulie de traction (24) par le biais d'un deuxième moyen de traction (26) pour le déplacement de la poulie de traction (24), le treuil à câble différentiel (28) pouvant tourner autour d'un axe de rotation (27) orienté essentiellement dans la direction axiale de l'embrayage à friction (14).

2. Embrayage à friction selon la revendication 1, **caractérisé en ce que** le plateau de pression (12) et/ou le contre-plateau comprennent une ouverture de réception pour recevoir au moins partiellement le treuil à câble différentiel (28), le treuil à câble différentiel (28) pouvant en particulier être inséré dans l'ouverture de réception dans la direction axiale de l'embrayage à friction (14).

3. Embrayage à friction selon la revendication 1 ou 2, **caractérisé en ce que** plus d'une poulie de traction (24) est accouplée au treuil à câble différentiel (28), en particulier par le biais du même deuxième moyen de traction (26).

4. Embrayage à friction selon l'une quelconque des revendications 1 à 3, **caractérisé en ce que** plus d'un moufle (16, 18, 48) est accouplé à la poulie de traction (24).

5. Embrayage à friction selon la revendication 4, **caractérisé en ce qu'**un premier moufle (16) et un deuxième moufle (18) sont accouplés à la poulie de traction (24), le premier moufle (16) et le deuxième moufle (18) étant disposés en regard l'un de l'autre dans la direction périphérique et le premier moyen de traction (20) du deuxième moufle (18) s'étendant dans une direction périphérique contraire à celle du premier moyen de traction (20) du premier moufle (16).

6. Embrayage à friction selon la revendication 4 ou 5, **caractérisé en ce qu'**un premier moufle (16) et un troisième moufle (48) sont accouplés à la poulie de traction (24), le premier moyen de traction (20) du troisième moufle (48) étant accouplé à la poulie de traction (24) par le biais d'une poulie de renvoi (22) du premier moufle (16).

7. Embrayage à friction selon l'une quelconque des revendications 1 à 6, **caractérisé en ce que** la poulie de traction (24) est mobile avec une composante de déplacement dans la direction radiale, en particulier avec une composante de déplacement principale dans la direction radiale.

8. Embrayage à friction selon l'une quelconque des revendications 1 à 7, **caractérisé en ce que** le treuil à câble différentiel (28) comprend un premier tambour de câble et un deuxième tambour de câble pouvant être relié de manière solidaire en rotation au premier tambour de câble, le deuxième moyen de traction (26) étant enroulé à la fois autour du premier tambour de câble et autour du deuxième tambour de câble, le diamètre du premier tambour de câble dans la région du moyen de traction enroulé étant supérieur au diamètre du deuxième tambour de câble dans la région du moyen de traction enroulé, le deuxième moyen de traction (26) s'étendant sur l'au moins une poulie de traction (24).

9. Embrayage à friction pour un véhicule, en particulier pour l'accouplement d'un moteur d'entraînement d'un véhicule automobile à une transmission de véhicule automobile, comprenant
un contre-plateau,
un plateau de pression (12) mobile par rapport au contre-plateau pour presser un disque d'embrayage entre le contre-plateau et le plateau de pression (12),
un système d'actionnement pour la transmission d'une force d'actionnement en vue du déplacement relatif du plateau de pression (12) par rapport au contre-plateau, le système d'actionnement comprenant au moins une roue d'entraînement pouvant être entraînée par le système d'actionnement et une roue de freinage en liaison fonctionnelle directement ou indirectement avec la roue d'entraînement avec transmission de force, la roue de freinage étant, en vue du déplacement axial du plateau de pression (12) par rapport au contre-plateau, reliée au plateau de pression (12) ou au contre-plateau de manière fixe ou rotative de façon freinée lors d'une rotation de la roue d'entraînement, et
une poulie d'entraînement (28) accouplée à la roue d'entraînement par le biais d'un moyen de traction (26), la poulie d'entraînement (28) pouvant tourner autour d'un axe de rotation (27) orienté essentiellement dans la direction axiale de l'embrayage à friction (14).

10. Embrayage à friction selon la revendication 9, **caractérisé en ce que** le plateau de pression (12) et/ou le contre-plateau comprennent une ouverture de réception pour recevoir au moins partiellement la poulie d'entraînement (28), la poulie d'entraînement (28) pouvant en particulier être insérée dans l'ouverture de réception dans la direction axiale de l'embrayage à friction (14).
